Europäisches Patentamt

European Patent Office

Office européen des brevets

(11) Publication number: 0 183 851
A1

# EUROPEAN PATENT APPLICATION
published in accordance with Art. 158(3) EPC

(21) Application number: 85902639.5

(22) Date of filing: 22.05.85

Data of the international application taken as a basis:

(86) International application number:
PCT/JP85/00281

(87) International publication number:
WO85/05521 (05.12.85 85/26)

(51) Int. Cl.⁴: **H 04 N 5/445**

(30) Priority: 22.05.84 JP 103077/84

(43) Date of publication of application:
11.06.86 Bulletin 86/24

(84) Designated Contracting States:
DE FR GB NL

(71) Applicant: SONY CORPORATION
7-35 Kitashinagawa 6-Chome Shinagawa-ku
Tokyo 141(JP)

(72) Inventor: ISHIGAKI, Yoshio Sony Corporation
7-35, Kitashinagawa 6-chome
Shinagawa-ku Tokyo 141(JP)

(72) Inventor: NAGAI, Kunio Sony Corporation
7-35, Kitashinagawa 6-chome
Shinagawa-ku Tokyo 141(JP)

(72) Inventor: AMANO, Toshio Sony Corporation
7-35, Kitashinagawa 6-chome
Shinagawa-ku Tokyo 141(JP)

(72) Inventor: ODA, Osamu Sony Corporation
7-35, Kitashinagawa 6-chome
Shinagawa-ku Tokyo 141(JP)

(74) Representative: Cotter, Ivan John et al,
D. YOUNG & CO. 10 Staple Inn
London WC1V 7RD(GB)

(54) TELEVISION RECEIVING SET.

(57) A television receiving set which is capable of displaying a timekeeper and a calender by utilizing a picture tube. The condition for displaying picture is controlled by a control circuit (20) in the form of a microcomputer which has a program timer function for displaying picture. When this month's calendar is to be displayed, today's date is displayed in a mode different from other calendar dates, so that the date of today can be reliably recognized and confirmed.

*FIG. 4G*

| 1984 | | May. | | | | |
|---|---|---|---|---|---|---|
| SU | MO | TU | WE | TH | FR | SA |
| | | 1 | 2 | 3 | 4 | 5 |
| 6 | 7 | 8 | 9 | 10 | 11 | 12 |
| 13 | 14 | 15 | 16 | 17 | 18 | 19 |
| 20 | 21 | 22 | 23 | 24 | 25 | 26 |
| 27 | 28 | 29 | 30 | 31 | | |

EP 0 183 851 A1

Croydon Printing Company Ltd.

0183851

TITLE OF THE INVENTION

TELEVISION RECEIVER

TITLE MODIFIED
see front page

TECHNICAL FIELD

This invention relates to a television receiver which can display a clock and a calendar by utilizing a display screen of a picture tube and more particularly to a television receiver in which when a calendar of this month is displayed, today's calendar date can be differently displayed from other calendar dates.

BACKGROUND ART

According to an existing television receiver, since a current time signal is transmitted from a broadcast station only during a particular time period, it is displayed only such particular time period and so, during other time periods, it is impossible to confirm the current time from the picture screen of the television receiver. However, when a viewer enjoys a broadcasting program, it is convenient for the viewer if a current time and so on can be selectively and desirably displayed under the state that they are superimposed upon the television picture. At that time, if today's date, a day of the week and so on can be displayed thereon simultaneously, it is more convenient.

Further, when there is no calendar in a living room and a parlor in which a television receiver is installed, if instead of the television picture, the calendar of this month can be displayed on the display screen (CRT display screen) of the television receiver, it is considerably convenient.

In a case where a clock display (including the display of date and the like) and the display of calendar are made on

0183851

the same CRT display screen as above and instead of the television picture the calendar of this month is displayed, if today's calendar date can be differently displayed from other calendar dates, for example, only today's calendar date can be made to blink, it is possible to confirm the today's date with great ease so that it is much more convenient.

Of course, if the user can desirably set a particular noticeable calendar date such as his birthday and so on in addition to these display functions and the birthday can be differently displayed from other dates like the case of the above mentioned blinking display, it is possible for the user to confirm the particular date with great ease.

Therefore, this invention is to propose a television receiver which can carry-out the display of a clock and a calendar by using the same CRT display screen and also by which at least today's date of the calendar in this month calendar display can be confirmed with ease.

DISCLOSURE OF INVENTION

To this end, this invention utilizes a micro-computer and a character generator to make at least today's date display produced from a clock timer incorporated in the micro-computer different from other date display during the display period of the calendar of this month, whereby to achieve the aforesaid object.

The display of the today's date may be blinked by alternately displaying the today's date and a symbol mark which is not related to this date (numeral) at a constant period and it may also be possible that the date color of the same date is made different from the other date colors.

BRIEF DESCRIPTION OF DRAWINGS

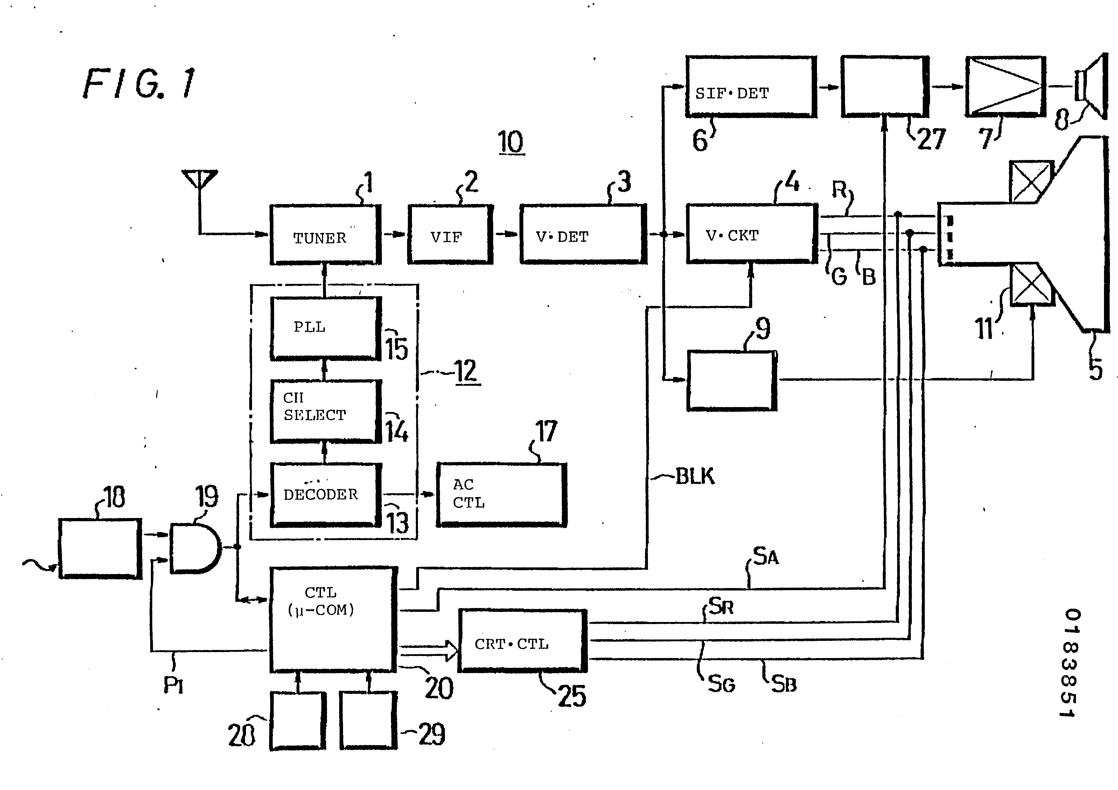

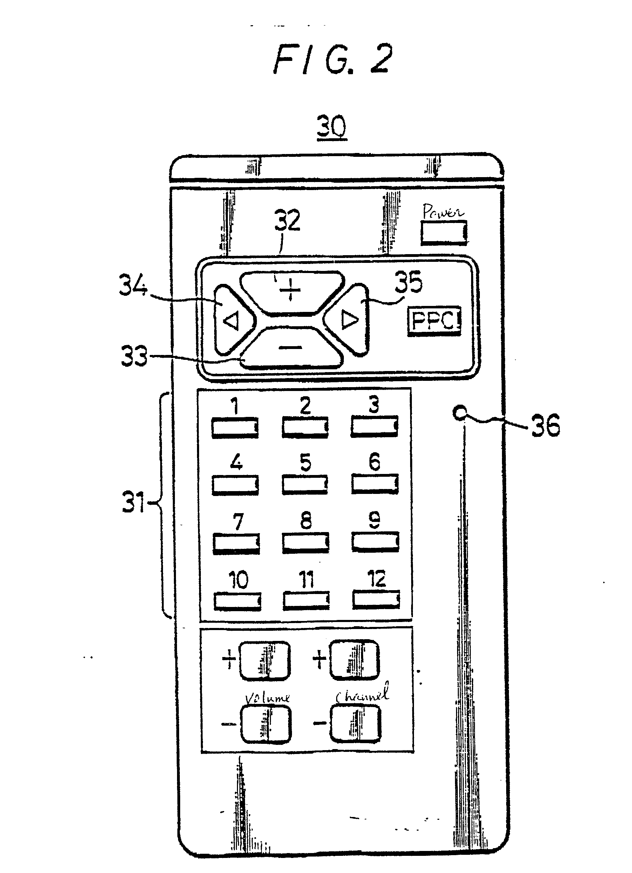

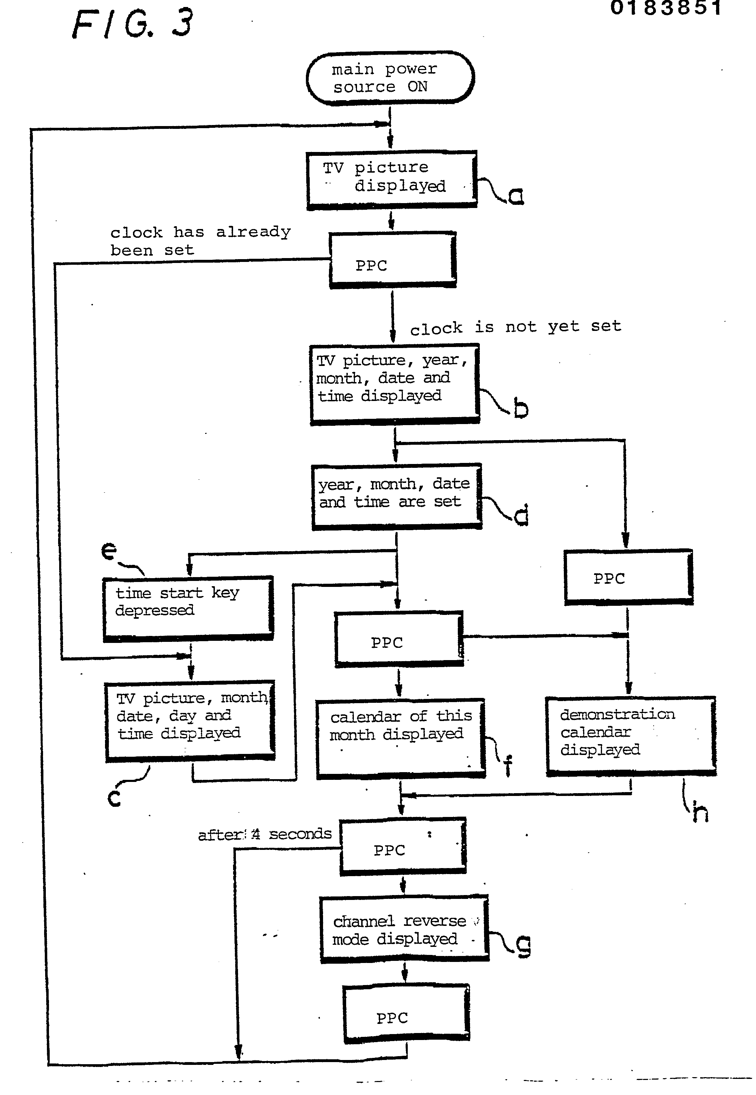

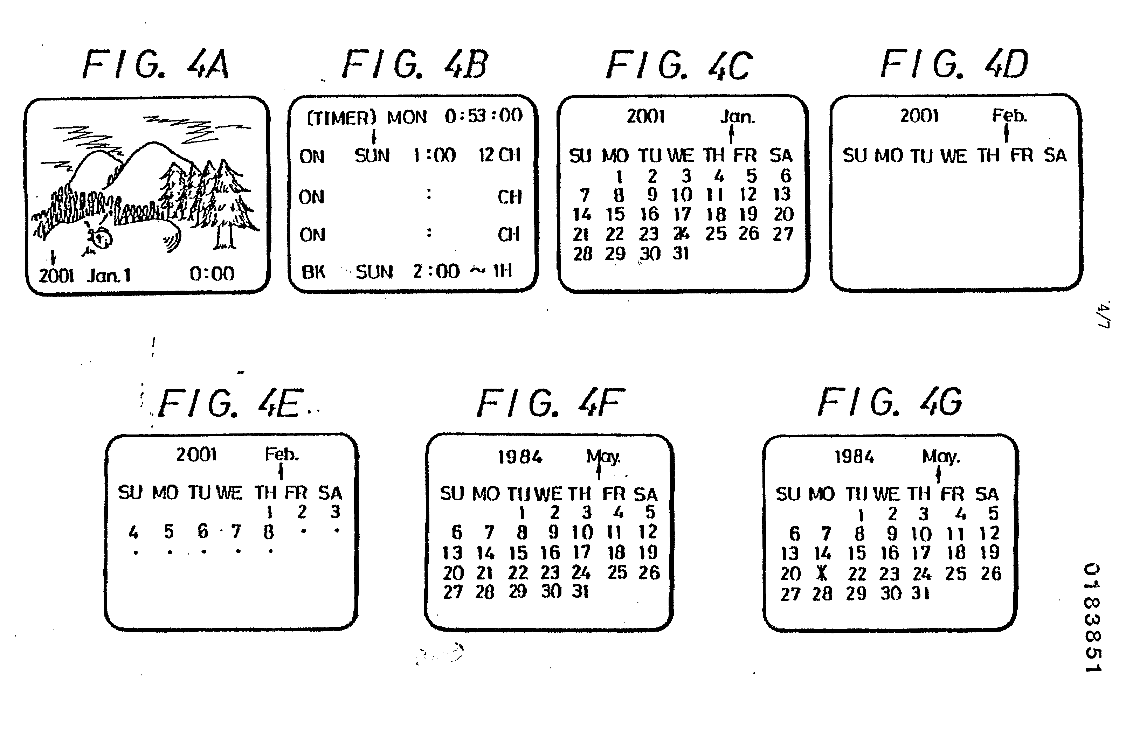

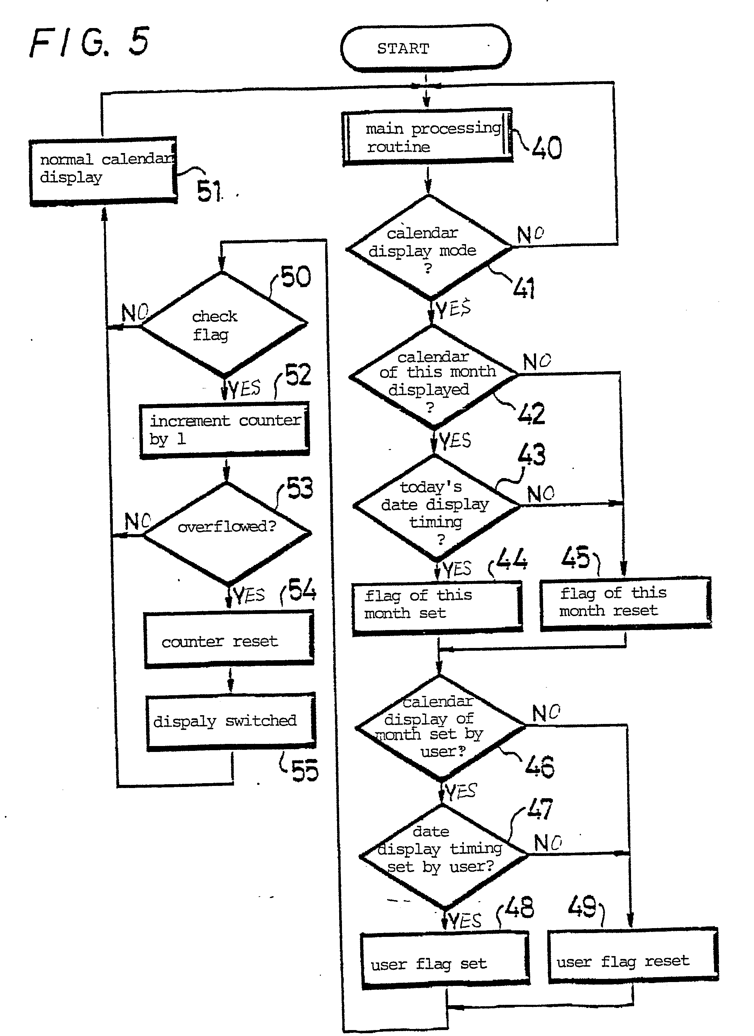

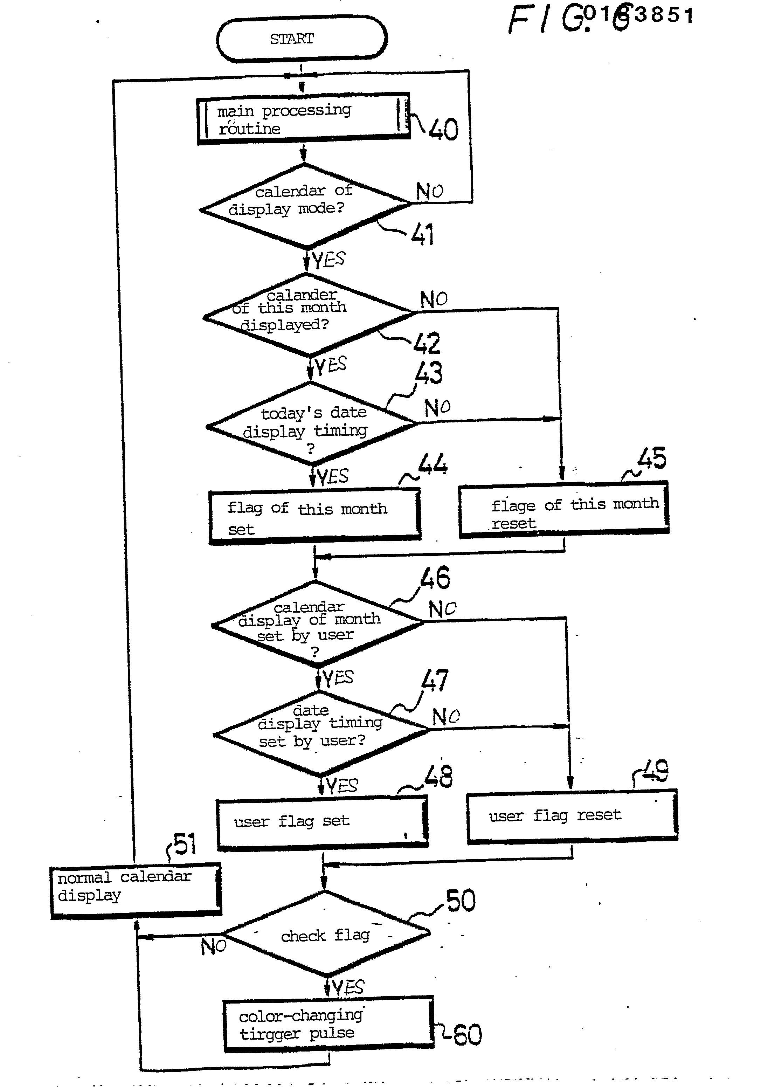

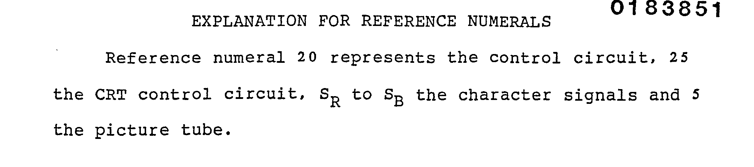

Fig. 1 is a systematic diagram showing an embodiment of a television receiver according to the present invention, Fig. 2 is a plan view showing an example of a key arrangement of a commander, Fig. 3 is a flow chart showing an example of a transition of a display in this invention, Fig. 4 is a diagram showing an example of a displayed picture, and Figs. 5 and 6 are flow charts showing an example of a display operation of the present invention.

BEST MODE FOR CARRYING OUT THE INVENTION

Subsequently, an embodiment of a television receiver according the present invention will hereinafter be described in detail with reference to Fig. 1 and the followings.

In the present invention, although a fundamental picture is a television picture and a picture to be used instead of this television picture or to be superimposed is a calendar picture and a clock picture, other pictures than these pictures can be displayed on the same CRT display screen. In the television receiver to which the present invention is applied, it is possible to display a program reserve content and so on other than these pictures.

Fig. 1 shows one example of the television receiver according to the present invention. Reference numeral 1 designates a tuner, 2 a video intermediate frequency amplifying circuit, 3 a video detector circuit, 4 a video output circuit, 5 a picture receiving tube (CRT), 6 a sound intermediate frequency amplifying circuit, 7 an output amplifier, 8 a speaker, 9 a horizontal and vertical deflection circuit and 11 a deflection system. Reference numeral 12 designates an electronic tuning circuit, 13 a decoder for receiving a remote control signal and a channel selection signal in the television receiver, 14 a channel selection voltage generating circuit and 15 a PLL which receives this channel selection voltage. The output from the decoder 13 is supplied to an AC power source control circuit 17. Reference numeral 18 designates a receiving element for receiving the remote control signal.

Reference numeral 20 designates a control circuit having a program timer function for picture display and its main body is formed of a micro-computer. A CRT control circuit 25 incorporating therein a character generator is operated by receiving the command from this control circuit 20. Red to blue character signals $S_R$, $S_G$ and $S_B$ are generated from this CRT control circuit 25. From the control circuit 20, a television picture erasing blanking signal BLK is supplied to the video output circuit 4 and an audio control signal $S_A$ is supplied to an audio control circuit 27 so as to emanate a buzzer sound at the end timing of the key operation, if necessary.

An AND circuit 19 is provided to inhibit the input of the remote control signal by a pulse $P_I$ when the control signal is delivered from the control circuit 20 to the electronic tuning circuit 12.

Reference numeral 28 designates a mode switching key provided on the main body of the television receiver and which is formed of a PPC (Programmable Pick Up Center) key in this embodiment. Reference numeral 29 designates a timer key which can turn on and off a reserve timer. The command data from these keys are latched in a CPU through an I/O port provided in the control circuit 20.

Fig. 2 illustrates one example of a key arrangement provided on a commander 30. The commander 30 is used, in addition to the channel selection, turning on and off the power source and so on, to preset the above mentioned current time and the like. Of a plurality of its keys, reference numeral 31 generally designates a direct selection key for a channel, a PPC key is a mode switching key having the same function as that of the key provided on the main body of the television receiver, 32 and 33 desigante "+" and "-" keys and 34 and 35 right and left shift keys. Reference numeral 36 designates a clock start key of a pencil type.

In this invention, the setting of time, the displaying of the calendar and so on are carried out by the micro-computer. Fig. 3 is a display flow chart used to explain the above mentioned picture display in connection with the key operation. An outline of the operation procedure will be described with reference to this flow chart. At first, when the main power supply source is turned on, a normal television picture (hereinafter, the display pictures such as this television picture and so on will be referred to as a page) is displayed (at step a). Then, when the PPC key is depressed, if the current time is not yet set, year, month, date and time, which are pre-determined regardless of the real year, month, date and the like, are superimposed upon the television picture (at step b). An example of displayed year, month, date and time is shown in Fig. 4A. The year, month and date set beforehand are only an example.

When the current time is already set and the clock is already started, the real year, month, date and time are superimposed and displayed upon the television picture (step c). When the current time is not yet set, if the current time is set (step d) and the time start key 36 is depressed (step e), the timer program is started from that time point, the clock is operated and the routine goes to the step c.

When instead of operating the clock start key 36 the PPC key is depressed, if the cursor "↓", which is a data setting mark displayed at the position of "year", is not placed at "100" years, a clock start mode is presented like the operation of the clock start key 36 and instead of the television picture, the calendar of this month is displayed (step f). When the PPC key is depressed from the state of the step c, the calendar of this month is similarly displayed. On this calendar, today's calendar date is differently displayed from other dates.

When the PPC key is depressed after the step f, the channel reserve mode is presented (step g) with the result that instead of the television picture, a channel reserve picture is displayed on the CRT display screen. An example of the reserve picture is illustrated in Fig. 4B. The channel reserve is made such that the "day of the week, time and number of the television channel" are set and in this example, the timer-off time is fixed to about 2 hours since the timer was made on. Since the channel reserve is not directly concerned with the gist of the present invention, this will not be described any more.

After the channel reserve was made or the channel reserve was ended, when the PPC-key is depressed, the normal television picture is displayed.

If under the state of the step b the PPC key is depressed or if under the state of the step d and also under the state that the cursor is placed at the position of "100" years the PPC key is depressed, a calendar for use in demonstration is displayed (step h). An example of the demonstration calendar is shown in Fig. 4C. In the demonstration calendar, the year and month displayed at the step b are displayed. This demonstration calendar is incremented at the interval of several seconds (2 to 3 seconds) to sequentially display the calendar of the next month. In this case, the scroll-down display is carried out such that all the dates on the calendar are erased temporarily and at the next instant, the date is sequentially displayed from the first day of the month (Figs. 4D and 4E). The calendar is made in accordance with Gregorian calendar and thence the calendar is displayed from January of A.D.0000 up to December of A.D.9999.

As described above, when the date and the time are not yet set, the calendar of the month unit is automatically renewed so that it can be confirmed visually that the current time is not yet set. If under this state the PPC key is depressed, the display mode is switched to the the channel reserve display mode.

The calendar is renewed at the cycle of 2 to 3 seconds and the month to be displayed is renewed sequentially. When the month displayed is renewed, the calendar of the month renewed during the period of the automatic renewal of the calendar is displayed again. With respect to the renewal of the displayed month, the renewal of ∂date∂ and the renewal of the display of "month" are carried out respectively as shown in Fig. 4C. When December is changed to January, the increment of year is also carried out.

0183851

The red to blue character signals $S_R$ to $S_B$ are generated from the CRT control circuit 25 shown in Fig. 1. When the calendar display is carried out, the control is carried out on the basis of the command data derived from the control circuit 20 such that the background is displayed thoroughly in blue, Sunday "SU" and dates concerning to this day of the week are displayed in red and other days of the week ".MO (Monday) to SA (Saturday)" and the related dates are displayed in green.

Fig. 5 is a flow chart showing one example of the display operation which will be done in accordance with the program data written in a ROM of the control circuit 20.

When the program starts, the program routine goes to a main processing routine of a step 40 in which a remote control data, a key input data in the main body of the television receiver, a power source synchronizing input for a clock timer generated by utilizing a commercial AC power source and so on are checked through the I/O port in accordance with the program written in the ROM of the CPU and in which processings to realize other display modes, such as the channel reserve and so on are carried out.

When the page is changed by the operation of the PPC key, the routine goes to a step 41 in which it is judged whether the current page is in the calendar display mode or whether it is in other display mode. If it is not in the calendar display mode, the routine returns to the step 40. If on the other hand it is in the calendar display mode, it is judged at step 42 whether the calendar of this month is displayed or not. If the calendar of this month is displayed, it is judged whether the timing is the today's date display timing or not (at step 43). If it is the today's date display timing, a flag for indicating the calendar of this month is set at step 44. If on the other hand it is neither the calendar display of this month nor the today's date display timing, the flag is reset at step 45.

In this embodiment, since the today's date can be differently displayed from other dates and the birthday can also be displayed, it is judged at step 46 whether the current display is the calendar display of the month in which the user set his birthday or not. If it is the calendar display of that set month, it is judged at step 47 whether or not the date display timing of the birthday thus set exists. If so, a user flag is set (at step 48). On the other hand, if it is neither the calendar display set by the user nor the set date display timing, the user flag is reset at step 49.

At a step 50, the presence or absence of the set and reset of the flag is judged. If it is not the today's date display timing, a normal calendar display data is transmitted at step 51, while if it is the today's date display timing, the flag is in the set state so that at that time, the routine goes to a change step to display a today's date. In this example, such intermittent display is carried out that the date is displayed for one second and a symbol mark, which is not concerned with this date, for example, a asterisk symbol "*" in this embodiment is displayed for about 0.5 seconds alternately.

To realize this intermittent display, at step 52, a counter (mere accumulating counter) for the date and symbol mark display time is incremented, and it is judged at step 53 whether it becomes equal to a counted value corresponding to the date display time or symbol mark display time or not. Since the date is displayed in the first place, that date is displayed until the date display time is elapsed. For example, if today' date is may 21, 1984, 21st day is displayed during a period of the date display time (Fig. 4F).

If it is judged at step 53 that the date display time is elapsed, the counter is reset (at step 45) and at step 55, the date is switched to the symbol mark so that instead of "21", mark "*" is displayed (Fig. 4G). Although the mark "*" is continuously displayed until the symbol mark display time is elapsed, if it is similarly judged at step 53 that the symbol mark display time is elapsed, instead of the mark "*", the date "21" is displayed again.

Accordingly, during a period in which the calendar of this month is displayed on the CRT display screen today's date is intermittently displayed at a predetermined cycle. This makes it possible to discriminate the today's date from other dates.

When the user flag is set, in addition to the fact that the today's date is intermittently displayed, the date set by the user is intermittently displayed through the like processing step. When the calendar display is the calender display of other month than this month (this can freely be selected by the user using the operation keys of the commander 30), if there is a date set by the user in that month, that date is intermittently displayed. However, today's date does not correspond thereto so that other dates than the date set by the user are not intermittently displayed.

The change of the display of the today's date and date set by the user is not limited to the intermittent display. For example, the displayed color of the date can be changed and also at the same time when the displayed color of the date is changed, the date can be intermittently displayed. A flow chart for the former is shown in Fig. 6. When the displayed color is changed it is only sufficient that at a step 60, a color-changing trigger pulse for the corresponding date is set.

Of course, in the case of the intermittent display, the symbol mark is not inserted but it may be blanked. Further, instead of this symbol mark, it is possible to insert other characters, symbols and so on. All of these can be realized by a minor change of the program.

As mentioned above, according to the present invention, since the clock and the calendar can be displayed by utilizing the same CRT display screen and under the state that the calender of this month is displayed, today's date or a date set beforehand is made different from the display of other dates, there is an effect that today's date or the pre-determined date can be acknowledged and confirmed accurately and positively.

CLAIMS

0183851

1. A television receiver in which a calendar is displayed on a display screen of a picture tube in accordance with a clock information, in which in said calendar display, at least today's date derived from said clock is made different from a display of other dates.

2. A television receiver according to claim 1, in which said today' date is intermittently displayed and a symbol mark, which is not concerned with numerals, is displayed during a period in which the date disappears.

3. A television receiver according to claim 1, in which said today's date is made different in display color.

(Substituted)

0183851

CLAIMS

1.(after being amended) A television receiver comprising:

a cathode ray tube;

clock means for generating time and calendar informations; and

display means responsive to said calendar information for displaying a calendar on said cathode ray tube, characterized in that said display means includes means responsive to said time information for displaying said calendar such that today's date is differently displayed from other dates.

2.(after being amended) A television receiver according to claim 1, characterized in that said today's date is intermittently displayed and a symbol mark other than numerals is displayed therebetween.

3.(after being amended) A television receiver according to claim 1, characterized in that said today's date is displayed with a different color from those of other dates.

4.(added) A television receiver comprising:

a cathode ray tube;

a micro-computer including clock means and character generating means; and

circuit means responsive to said micro-computer for displaying a calendar on said cathode ray tube, characterized in that said micro-computer includes control means for displaying said calendar such that today's date is differently displayed from other dates.

EXPLANATORY NOTE BASED ON THE REGULATION OF

ART. 19 (1) OF PATENT COOPERATION TREATY Claims described in the substituted paper are different from the claims that are forwarded in the first as follows.

Claims 1 to 3 are amended for the purpose of making the gist of the invention more clear.

Claim 4 is added newly.

# FIG. 1

# FIG. 2

# F I G. 3

```
        ┌──────────────┐
        │  main power  │
        │  source ON   │
        └──────────────┘
               │
               ▼
        ┌──────────────┐
        │  TV picture  │  a
        │  displayed   │
        └──────────────┘
               │
clock has already  ▼
been set      ┌──────────┐
◄─────────────│   PPC    │
              └──────────┘
                   │
                   ▼  clock is not yet set
        ┌──────────────────┐
        │ TV picture, year,│
        │ month, date and  │  b
        │ time displayed   │
        └──────────────────┘
               │
               ▼
        ┌──────────────────┐
        │ year, month, date│
        │ and time are set │  d
        └──────────────────┘

e    ┌──────────────┐                    ┌──────────┐
     │ time start key│                   │   PPC    │
     │ depressed     │                   └──────────┘
     └──────────────┘        ┌──────────┐
            │                │   PPC    │
            ▼                └──────────┘
     ┌──────────────┐
     │ TV picture, month│  ┌──────────────┐   ┌──────────────┐
     │ date, day and    │  │ calendar of this│ │ demonstration│
     │ time displayed   │  │ month displayed │ │ calendar     │
     └──────────────┘  c   └──────────────┘ f │ displayed    │ h
                                               └──────────────┘

                    after 4 seconds  ┌──────────┐
                    ◄────────────────│   PPC    │
                                     └──────────┘
                                          │
                                          ▼
                                 ┌──────────────┐
                                 │ channel reverse│  g
                                 │ mode displayed │
                                 └──────────────┘
                                          │
                                          ▼
                                     ┌──────────┐
                                     │   PPC    │
                                     └──────────┘
```

## FIG. 4A

2001  Jan.1          0:00

## FIG. 4B

| (TIMER) MON | 0:53:00 | |
|---|---|---|
| ON | SUN  1:00 | 12 CH |
| ON | : | CH |
| ON | : | CH |
| BK | SUN  2:00 ~ 1H | |

## FIG. 4C

2001                    Jan.

| SU | MO | TU | WE | TH | FR | SA |
|---|---|---|---|---|---|---|
|  |  |  |  | 1 | 2 | 3 |
| 4 | 5 | 6 | 7 | 8 | 9 | 10 |
| 11 | 12 | 13 | 14 | 15 | 16 | 17 |
| 18 | 19 | 20 | 21 | 22 | 23 | 24 |
| 25 | 26 | 27 | 28 | 29 | 30 | 31 |



2001                    Jan.

| SU | MO | TU | WE | TH | FR | SA |
|---|---|---|---|---|---|---|
|  | 1 | 2 | 3 | 4 | 5 | 6 |
| 7 | 8 | 9 | 10 | 11 | 12 | 13 |
| 14 | 15 | 16 | 17 | 18 | 19 | 20 |
| 21 | 22 | 23 | 24 | 25 | 26 | 27 |
| 28 | 29 | 30 | 31 |  |  |  |

## FIG. 4D

2001                    Feb.

| SU | MO | TU | WE | TH | FR | SA |
|---|---|---|---|---|---|---|

## FIG. 4E

2001                    Feb.

| SU | MO | TU | WE | TH | FR | SA |
|---|---|---|---|---|---|---|
|  |  |  |  |  | 1 | 2 | 3 |



2001                    Feb.

| SU | MO | TU | WE | TH | FR | SA |
|---|---|---|---|---|---|---|
|  |  |  |  | 1 | 2 | 3 |
| 4 | 5 | 6 | 7 | 8 | · | · |
| · | · | · | · | · |  |  |

## FIG. 4F

1984                    May.

| SU | MO | TU | WE | TH | FR | SA |
|---|---|---|---|---|---|---|
|  |  | 1 | 2 | 3 | 4 | 5 |
| 6 | 7 | 8 | 9 | 10 | 11 | 12 |
| 13 | 14 | 15 | 16 | 17 | 18 | 19 |
| 20 | 21 | 22 | 23 | 24 | 25 | 26 |
| 27 | 28 | 29 | 30 | 31 |  |  |

## FIG. 4G

1984                    May.

| SU | MO | TU | WE | TH | FR | SA |
|---|---|---|---|---|---|---|
|  |  | 1 | 2 | 3 | 4 | 5 |
| 6 | 7 | 8 | 9 | 10 | 11 | 12 |
| 13 | 14 | 15 | 16 | 17 | 18 | 19 |
| 20 | X | 22 | 23 | 24 | 25 | 26 |
| 27 | 28 | 29 | 30 | 31 |  |  |

# FIG. 5

```
                          ┌──────────┐
                          │  START   │
                          └──────────┘
                               │
                     ┌──────────────────┐
                     │ main processing  │  40
                     │    routine       │
                     └──────────────────┘
                               │
                          ╱─────────╲
                    ╱ calendar ╲  NO
                   ╱ display mode ╲───────┐
                    ╲     ?     ╱  41      │
                          ╲─────────╱
                            │ YES
                          ╱─────────╲
                  ╱ calendar of ╲  NO
                 ╱ this month     ╲──────┐
                ╲  displayed ?   ╱  42    │
                          ╲─────────╱
                            │ YES
                          ╱─────────╲   43
                  ╱ today's date ╲  NO
                 ╱ display timing  ╲────┐
                  ╲      ?       ╱      │
                          ╲─────────╱
                            │ YES  44        45
                    ┌──────────────┐  ┌──────────────┐
                    │ flag of this │  │ flag of this │
                    │ month set    │  │ month reset  │
                    └──────────────┘  └──────────────┘
```

normal calendar display  51

check flag  50  NO

increment counter by 1  52

overflowed?  53  NO

counter reset  54

dispaly switched  55

calendar display of month set by user?  46  NO

date display timing set by user?  47  NO

user flag set  48

user flag reset  49

FIG.16 0183851

```
              ┌──────────────┐
              │    START     │
              └──────┬───────┘
                     │
         ┌───────────┴──────────┐
         │                      ▼
         │         ┌────────────────────┐
         │         │  main processing   │ ～40
         │         │  routine           │
         │         └────────┬───────────┘
         │                  │
         │            ╱─────┴─────╲      NO
         │          ╱  calendar of  ╲ ──────┐
         │          ╲ display mode? ╱       │
         │            ╲─────┬─────╱ ～41     │
         │              YES │              │
         │            ╱─────┴─────╲      NO │
         │          ╱  calander     ╲ ───────────┐
         │          ╲ of this month ╱            │
         │          ╱  displayed?   ╲ ～42        │
         │            ╲─────┬─────╱              │
         │              YES │    ～43             │
         │            ╱─────┴─────╲      NO       │
         │          ╱ today's date  ╲ ────────┐  │
         │          ╲ display timing╱         │  │
         │            ╲  ?   ┬─────╱          │  │
         │              YES │  ～44            │  │
         │         ┌────────┴───────┐    ～45  │  │
         │         │ flag of this   │  ┌──────┴──┴──────┐
         │         │ month set      │  │ flage of this  │
         │         └────────┬───────┘  │ month reset    │
         │                  │          └───────┬────────┘
         │                  │◄─────────────────┘
         │            ╱─────┴─────╲  ～46
         │          ╱   calendar    ╲   NO
         │          ╲ display of month╱ ──────┐
         │          ╱  set by user   ╲        │
         │            ╲   ?  ┬─────╱          │
         │              YES │   ～47           │
         │            ╱─────┴─────╲            │
         │          ╱   date        ╲   NO      │
         │          ╲ display timing ╱ ────────┤
         │          ╱ set by user?  ╲          │
         │            ╲─────┬─────╱            │
         │              YES │    ～48  ～49       │
         │         ┌────────┴───────┐  ┌───────┴────────┐
         │         │  user flag set │  │ user flag reset│
  ～51    │         └────────┬───────┘  └───────┬────────┘
┌─────────┴──────┐          │◄─────────────────┘
│ normal calendar│          │
│ display        │    ╱─────┴─────╲   ～50
└─────────┬──────┘  ╱  check flag   ╲
          │    NO   ╲               ╱
          │◄────────  ╲─────┬─────╱
          │              YES │
          │         ┌────────┴───────┐
          │         │ color-changing │ ～60
          │         │ tirgger pulse  │
          │         └────────┬───────┘
          └───────────────────┘
```

## EXPLANATION FOR REFERENCE NUMERALS

**0183851**

Reference numeral 20 represents the control circuit, 25 the CRT control circuit, $S_R$ to $S_B$ the character signals and 5 the picture tube.

# INTERNATIONAL SEARCH REPORT

International Application No PCT/JP85/00281

## I. CLASSIFICATION OF SUBJECT MATTER (if several classification symbols apply, indicate all) 6
According to International Patent Classification (IPC) or to both National Classification and IPC

Int. Cl.$^4$: H04N 5/445

## II. FIELDS SEARCHED

### Minimum Documentation Searched 7

| Classification System | Classification Symbols |
|---|---|
| IPC | H04N 5/445, G09D 3/12 |

### Documentation Searched other than Minimum Documentation to the Extent that such Documents are Included in the Fields Searched 8

Jitsuyo Shinan Koho 1960–1984
Kokai Jitsuyo Shinan Koho 1971–1984

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 53-64071 (Citizen Watch Co., Ltd.), 19 November 1976 (19.11.76), fig. 6 (Family: none) | 1 |
| A | JP, A, 56-101591 (Ricoh Watch Co., Ltd.), 19 January 1980 (19.01.80), Fig. 1 (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 August 1985 (16.08.85) | 26 August 1985 (26.08.85) |

| International Searching Authority | Signature of Authorized Officer |
|---|---|
| Japanese ~~European~~ Patent Office | |

Form PCT/ISA/210 (second sheet) (January 1985)